# EUROPÄISCHE PATENTSCHRIFT

(11) **EP 3 867 685 B1**
(45) Veröffentlichungstag und Bekanntmachung des Hinweises auf die Patenterteilung: **03.12.2025**
(21) Anmeldenummer: 19800925.0
(22) Anmeldetag: 18.10.2019
(51) Int. Cl.: G02B 21/02, G02B 21/34, G02B 27/00

(54) **VERFAHREN ZUM KORRIGIEREN EINES ABBILDUNGSFEHLERS IN EINEM MIKROSKOPSYSTEM UND MIKROSKOPSYSTEM**
METHOD FOR CORRECTING AN IMAGING ERROR IN A MICROSCOPE SYSTEM, AND MICROSCOPE SYSTEM
PROCÉDÉ DE CORRECTION D'UNE ABERRATION DANS UN SYSTÈME DE MICROSCOPE ET SYSTÈME DE MICROSCOPE

(30) Priorität: 19.10.2018 DE 102018126021
(43) Veröffentlichungstag der Anmeldung: 25.08.2021
(73) Patentinhaber: Leica Microsystems CMS GmbH, 35578 Wetzlar (DE)
(72) Erfinder: SCHUMANN, Christian, 35423 Lich (DE)
(74) Vertreter: Schaumburg und Partner Patentanwälte mbB
(86) Internationale Anmeldenummer: PCT/EP2019/078385
(87) Internationale Veröffentlichungsnummer: WO 2020/079230

(56) Entgegenhaltungen:
- DE-A1- 102017 105 926

## Beschreibung

Die Erfindung betrifft ein Verfahren zum Korrigieren eines Abbildungsfehlers in einem Mikroskopsystem, das ein Mikroskop und eine optische Komponente umfasst, wobei ein in der optischen Komponente angeordnetes Korrektionsmittel zum Korrigieren des Abbildungsfehlers eingestellt wird. Die Erfindung betrifft ferner ein Mikroskopsystem, das ein Mikroskop und eine optische Komponente mit einem Korrektionsmittel umfasst.

Zur Steigerung der Qualität einer lichtmikroskopischen Abbildung einer Probe ist es in der Praxis häufig erforderlich, im Mikroskopbetrieb eine korrigierende Einstellung an dem optischen Abbildungssystem vorzunehmen, beispielsweise zur Korrektion eines sphärischen Abbildungsfehlers bei Vorliegen einer Brechungsindexfehlanpassung. Diese Einstellung erfordert die Kenntnis spezifischer Steuerdaten einzelner Komponenten des optischen Abbildungssystems. Insbesondere bei auswechselbaren Komponenten wie etwa an einem Mikroskop anbringbaren Wechselobjektiven stellt es eine Herausforderung dar, diese Steuerdaten, die aufgrund toleranzbedingter Fertigungsschwankungen auch für Wechselobjektive gleichen Bautyps individuell sind, unter Beibehaltung schon vorhandener Anschlussschnittstellen zwischen Mikroskop und Wechselobjektiv zur Verfügung zu stellen.

Aus dem Stand der Technik sind optische Komponenten wie etwa Objektive für Fotokameras bekannt, die Speicherbausteine aufweisen, in denen spezifische Steuerdaten gespeichert sind. Die Ausstattung optischer Komponenten mit Speicherbausteinen ist jedoch mit einem vergleichsweise hohen Aufwand verbunden. Ferner sind derartige optische Komponenten nicht mit bestehenden optischen Systemen kompatibel, da sie eine eigene Anschlussschnittstelle benötigen.

Das Dokument DE 2017 105 926 A1 offenbart ein Verfahren zum Korrigieren eines Abbildungsfehlers in einem Mikroskopsystem, das ein Mikroskop, ein Objektiv, eine Korrekturoptik und eine Datenbank umfasst, die über ein Datenfernübertragungsnetzwerk mit dem Mikroskop verbunden ist. In dieser Datenbank sind Zusammenhänge zwischen verschiedenen Arten von Objekten, d.h. Proben, und deren Brechungsindizes hinterlegt.

Es ist Aufgabe der Erfindung, ein Verfahren sowie ein Mikroskopsystem mit einem Mikroskop und einer optischen Komponente anzugeben, die eine einfache und zuverlässige Korrektion von Abbildungsfehlern erlauben.

Diese Aufgabe wird durch ein Verfahren mit den Merkmalen des Anspruchs 1 und durch ein Mikroskopsystem mit den Merkmalen des Anspruchs 8 gelöst. Vorteilhafte Weiterbildungen finden sich in den abhängigen Ansprüchen.

Die Erfindung betrifft ein Verfahren zum Korrigieren eines Abbildungsfehlers in einem Mikroskopsystem, das ein Mikroskop und eine optische Komponente umfasst, wobei ein in der optischen Komponente enthaltenes Korrektionsmittel zum Korrigieren des Abbildungsfehlers eingestellt wird. Bei dem erfindungsgemäßen Verfahren wird wenigstens eine dem Abbildungsfehler zugeordnete und für die optische Komponente individuelle Stellgröße, anhand derer das Korrektionsmittel einstellbar ist, von einem entfernten Speichermodul über ein Datenfernübertragungsnetzwerk empfangen.

Bei der vorgenannten optischen Komponente handelt es sich, ohne hierauf beschränkt zu sein, insbesondere um ein Objektiv. Zudem bildet die optische Komponente vorzugsweise eine Wechselkomponente, d.h. eine Komponente, die an sich von dem Mikroskop separat vorgesehen ist und nur bei Bedarf an dem Mikroskop angebracht wird. Es ist jedoch ebenso denkbar, dass die erfindungsgemäße optische Komponente integraler Bestandteil des Mikroskops selbst ist.

Das entfernte Speichermodul bildet eine von dem Mikroskop und der optischen Komponente räumlich getrennte Funktionseinheit. Diese Funktionseinheit kann beispielsweise Teil eines Servers oder eines mehrere Server umfassenden Serversystems sein. Denkbar ist auch, das entfernte Speichermodul in Form eines als Cloud bezeichneten dezentralen Speichers zu realisieren.

Als erfindungsgemäßes Datenfernübertragungsnetzwerk, das der Übertragung der dem zu korrigierenden Abbildungsfehler zugeordneten Stellgröße dient, kann insbesondere das Internet oder ein lokales Netzwerk genutzt werden.

In dem entfernten Speichermodul ist die für die optische Komponente individuelle Stellgröße beispielsweise in Form einer Tabelle gespeichert, in der verschiedene Werte der Stellgröße jeweils einem oder mehreren Werten des zu korrigierenden Abbildungsfehlers zugeordnet sind. Die für die optische Komponente individuelle Stellgröße kann auch in Form einer Zuordnungsvorschrift vorgehalten werden, die den Werten des zu korrigierenden Abbildungsfehlers jeweils einen Wert der Stellgröße zuordnet. Durch die individuelle Zuordnung zwischen Abbildungsfehler und Stellgröße ist das Korrektionsverhalten der individuellen optischen Komponente unter Berücksichtigung der Fertigungstoleranzen charakterisiert. Dies erlaubt es, einen in dem Mikroskopsystem auftretenden Abbildungsfehler in einfacher Weise komponentenindividuell und damit präzise zu korrigieren.

Die individuelle Stellgröße wird über ein Datenfernübertragungsnetzwerk empfangen, d.h. eine Schnittstelle, die üblicherweise in dem Mikroskopsystem ohnehin schon vorhanden ist. Im Unterschied zu einer Lösung, bei der anstelle des entfernten Speichermoduls ein Speicher genutzt wird, der in der optischen Komponente selbst integriert ist, benötigt das erfindungsgemäße Verfahren somit keine eigene Schnittstelle zur Datenübertragung zwischen Mikroskop und optischer Komponente. Hierdurch lässt sich das erfindungsgemäße Verfahren besonders einfach umsetzen.

In einer bevorzugten Ausführungsform wird die wenigstens eine Stellgröße an der optischen Komponente individuell gemessen oder aus optischen Daten der optischen Komponente errechnet und dann in dem entfernten Speichermodul gespeichert. Beispielsweise kann die Stellgröße in einem Endmontageschritt für die optische Komponente individuell unter Anwendung eines interferometrischen Verfahrens ermittelt werden.

In einer besonders bevorzugten Ausführungsform wird der optischen Komponente ein eindeutiger Bezeichner zugeordnet, anhand dessen die wenigstens eine Stellgröße der optischen Komponente eindeutig zuordenbar ist. Vorzugsweise wird in dem entfernten Speichermodul eine Verknüpfung zwischen dem der optischen Komponente zugeordneten eindeutigen Bezeichner und der individuell bestimmten Stellgröße gespeichert. Der eindeutige Bezeichner ist beispielsweise als menschenlesbare Information, z. B. in Form einer Seriennummer, oder als maschinenlesbare Information, z.B. in Form eines Barcodes, eines QR-Codes oder eines RFID-Tags, die jeweils an der optischen Komponente ablesbar ist.

In einer weiteren bevorzugten Ausführungsform wird über das Datenfernübertragungsnetzwerk ein Authentifizierungsschritt durchgeführt, bevor die wenigstens eine Stellgröße empfangen wird. Eine Authentifizierung kann insbesondere durch eine Bedienperson erfolgen, beispielsweise durch Eingeben einer Benutzerkennung und/oder eines Passworts.

Der zu korrigierende Abbildungsfehler wird zumindest unter Verwendung des Mikroskops bestimmt. Vorzugsweise wird der zu korrigierende Abbildungsfehler in Form von Entwicklungskoeffizienten orthogonaler Polynome, insbesondere Zernike-Polynome, übermittelt. Dies ist eine besondere einfache Art und Weise, den zu korrigierenden Abbildungsfehler zu quantifizieren. Alternativ oder zusätzlich werden die den zu korrigierenden Abbildungsfehler verursachende oder beeinflussende Parameter, beispielsweise eine Deckglasdicke, ein Brechungsindex der Probe oder des Immersionsmediums, unter Verwendung des Mikroskops bestimmt.

In einer weiteren bevorzugten Ausführungsform wird der Abbildungsfehler von dem Mikroskop an das entfernte Speichermodul übertragen. Es wird wenigstens eine dem übertragenen Abbildungsfehler zugeordnete und für die optische Komponente individuelle Stellgröße, anhand derer das Korrektionsmittel einstellbar ist, von dem entfernten Speichermodul über ein Datenfernübertragungsnetzwerk empfangen. Auf Grundlage der dem übertragenen Abbildungsfehler zugeordneten Stellgröße wird die Einstellung des Korrektionsmittels vorgenommen. Die erlaubt eine Korrektion des durch das Mikroskop bestimmten Abbildungsfehler mittels den für die optische Komponente individuellen Steuerdaten.

Zur Bestimmung des zu korrigierenden Abbildungsfehlers werden ein Brechungsindex einer Probe, eines Einbettmediums, eines Immersionsmediums und/oder eines Deckglases und/oder die Dicke des Deckglases und/oder die Position der Objektebene relativ zur Position des Deckglases bestimmt. Auch diese Daten können an das entfernte Speichermodul übertragen werden. Hierdurch kann eine individuelle Ermittlung der Stellgröße nicht nur am Ort des Mikroskops sondern auch dezentral durchgeführt und die Stellgröße dann an das Mikroskop übermittelt werden.

Die Erfindung betrifft ferner ein Mikroskopsystem, umfassend ein Mikroskop und eine optische Komponente mit einem Korrektionsmittel, das zum Korrigieren eines Abbildungsfehlers einstellbar ist. Das Mikroskop umfasst ferner ein entferntes Speichermodul, wobei das Mikroskopsystem ausgebildet ist, wenigstens eine dem Abbildungsfehler zugeordnete und für die optische Komponente individuelle Stellgröße, anhand derer das Korrektionsmittel einstellbar ist, über ein Datenfernübertragungsnetzwerk von dem entfernten Speichermodul zu empfangen.

Das entfernte Speichermodul ist dazu ausgebildet, anhand von von dem Mikroskop empfangenen Daten die individuellen Stellgröße zu errechnen und an das Mikroskop zu übermitteln.

In einer weiteren bevorzugten Weiterbildung umfasst das Mikroskop eine Steuereinheit, die ausgebildet ist, das in der optischen Komponente enthaltene Korrektionsmittel zum Korrigieren des Abbildungsfehlers anzusteuern. Die Einstellung des Korrektionsmittels zur Korrektion des Abbildungsfehlers erfolgt auf Grundlage der für die optische Komponente individuellen Zuordnung zwischen dem Abbildungsfehler und der dem Abbildungsfehler zugeordneten Stellgröße. Betrachtet man rein beispielhaft einen Fall, in dem der Abbildungsfehler in Abhängigkeit der Deckglasdicke bestimmt wird, so kann die Stellgröße jedes Mal, d.h. für jede konkret bestimmte Deckglasdicke, aus einer in dem entfernten Speichermodul gespeicherten Tabelle abgefragt oder aus einer in dem entfernten Speichermodul gespeicherten Zuordnungsvorschrift ermittelt wird. Alternativ kann die Tabelle bzw. die Zuordnungsvorschrift einmal, d.h. für alle relevanten Deckglasdicken, durch die Steuereinheit empfangen und gespeichert und dann ausgewertet wird.

Alternativ oder zusätzlich können auch Informationen über die optische Wirkung der Stellgröße empfangen werden, aufgrund derer durch die Steuereinheit beispielsweise jeweils ein Sollwert der Stellgröße, der jeweils verschiedenen Deckglasdicken zugeordnet ist, errechnet werden kann. Auch kann die Stellgröße im entfernten Speichermodul erst zum Abfragezeitpunkt aufgrund von vorliegenden Informationen, beispielsweise einer Korrektionswirkung der Stellgröße und/oder von von dem Mikroskop empfangenen Informationen, beispielswiese einer Deckglasdicke erzeugt werden.

In einer bevorzugten Weiterbildung ist das Mikroskopsystem ausgebildet, einen der optischen Komponente zugeordneten eindeutiger Bezeichner auszulesen, anhand dessen die wenigstens eine Stellgröße der optischen Komponente eindeutig zuordenbar ist.

Vorzugsweise umfasst das Mikroskopsystem eine Eingabevorrichtung zur benutzerseitigen Eingabe des der optischen Komponente zugeordneten eindeutigen Bezeichners. Bei der Eingabevorrichtung kann es sich beispielsweise um eine Tastatur oder ein numerisches Tastenfeld handeln.

Es ist vorteilhaft, wenn in dem entfernten Speichermodul eine für die optische Komponente individuelle Hystereseinformation gespeichert ist, unter Berücksichtigung derer das Korrektionsmittel einstellbar ist. Eine mechanische Hysterese des Korrektionsmittels ist eine Fehlerquelle bei der Einstellung des Korrektionsmittels. Die auf dem entfernten Speichermodul gespeicherte Hystereseinformation ermöglicht der Steuereinheit, eine komponentenindividuelle Einstellung des Korrektionsmittels unter Berücksichtigung der gespeicherten Hysterese vorzunehmen. Beispielsweise kann die Hystereseinformation einen Offset umfassen, der zu der dem empfangenen Abbildungsfehler zugeordneten Stellgröße addiert oder von dieser abgezogen werden muss, um die Hysterese zu kompensieren. Alternativ kann die Hystereseinformation Anweisungen umfassen, nach denen das Korrektionsmittel nur in einer bestimmten Art und Weise eingestellt werden soll. Handelt es sich bei dem Korrektionsmittel etwa um eine Linse, so kann die Hystereseinformation insbesondere die Anweisung umfassen, die der Stellgröße zugeordnete Position der Linse nur aus einer Richtung anzufahren.

Vorzugsweise umfasst das Korrektionsmittel wenigstens eine Linse, die zur Korrektion des Abbildungsfehlers entlang der optischen Achse der optischen Komponente bewegbar ist. Durch eine entlang der optischen Achse bewegbaren Linse oder Linsengruppe lassen sich sphärische Abbildungsfehler in einfacher Weise zuverlässig korrigieren.

Vorzugsweise umfasst die optische Komponente einen mechanischen Anschlag und/oder eine Lichtschranke zum Erfassen eines Referenzwertes der Stellgröße. Der momentane Wert der Stellgröße relativ zu dem mechanischen Anschlag und/oder der Lichtschranke wird mittels des Referenzwertes durch ein geeignetes Messsystem, vorzugsweise einen Encoder, erfasst. Hierdurch kann beispielsweise eine Abweichung zwischen einem IstWert und einem Soll-Wert der Stellgröße erfasst werden.

In einer weiteren Ausführungsform sind in dem entfernten Speichermodul zusätzliche optische Daten gespeichert, die individuell auf die optische Komponente bezogen sind. Diese optischen Daten können genutzt werden, um den zu korrigierenden Abbildungsfehlers mit Hilfe des Mikroskops zu bestimmen. Die optischen Daten sind in dem entfernten Speichermodul gespeichert und können über das Datenfernübertragungsnetzwerk durch das Mikroskop empfangen werden. Bei den optischen Daten kann es sich insbesondere um die numerische Apertur, die Brechzahl eines Immersionsmediums, die Vergrößerung, und/oder die Farbkorrektion der optischen Komponente handeln. Ferner können in dem entfernten Speichermodul auch weitere für den Betrieb des Mikroskopsystems erforderliche Daten wie Arbeitsabstand, Lage der Austrittspupille, Vignettierungsdaten, Steuerdaten für Autofokus- oder Fokushaltesysteme und/oder Laser-Zerstörschwellen sowie Bezeichnung, Bestellnummer und/oder Seriennummer gespeichert sein. Insbesondere können in dem entfernten Speichermodul eine oder mehrere Kontrollsummen, sogenannte Hashes, gespeichert sein, die zur Überprüfung der empfangenen Stellgröße dienen.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische Darstellung eines Mikroskopsystems als Ausführungsbeispiel; und
- Figur 2: ein Flussdiagramm, das eine Ausführungsform eines Verfahrens zur Korrektion eines Abbildungsfehlers mittels des Mikroskopsystems nach Figur 1 zeigt.

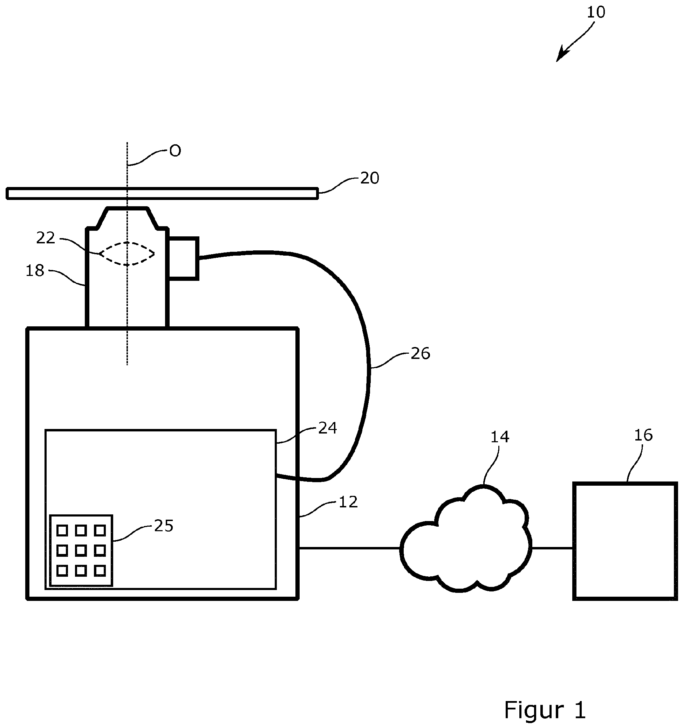

Figur 1 zeigt ein Mikroskopsystem 10 als Ausführungsbeispiel. Das erfindungsgemäße Mikroskopsystem 10 umfasst ein Mikroskop 12, ein Datenfernübertragungsnetzwerk 14 und ein entferntes Speichermodul 16. Das Mikroskopsystem 10 weist ferner ein Objektiv 18 auf, das einem Deckglas 20 zugewandt ist. Das Objektiv 18 stellt in dem vorliegenden Ausführungsbeispiel die erfindungsgemäß angesteuerte optische Komponente dar.

Das Objektiv 18 enthält ein Korrektionsmittel 22, das zum Korrigieren eines Abbildungsfehlers einstellbar ist. Vorliegend ist das Korrektionsmittel 22 eine Linse, die entlang der optischen Achse O des Objektivs 18 verschiebbar ist. Dem Objektiv 18 ist ferner ein eindeutiger Bezeichner zugeordnet. Dieser eindeutige Bezeichner ist beispielsweise als menschenlesbare Information, z.B. in Form einer Seriennummer, oder als maschinenlesbare Information, z.B. in Form eines Barcodes, eines QR-Codes oder eines RFID-Tags, realisiert. Diese Information ist an dem Objektiv 18 ablesbar.

Das Mikroskop 10 enthält eine Steuereinheit 24, die über ein Kabel 26 mit dem Objektiv 18 und über das Datenfernübertragungsnetzwerk 14 mit dem entfernten Speichermodul 16 verbunden ist. Die Steuereinheit 24 weist ferner eine Eingabevorrichtung 25 auf, mittels derer eine Bedienperson Daten in das Mikroskopsystem 10 eingeben kann.

Das entfernte Speichermodul 16 ist im gezeigten Ausführungsbeispiel Teil eines zentralen Servers, der mit dem Datenfernübertragungsnetzwerk 14 verbunden ist. Alternativ kann das entfernte Speichermodul 16 auch Teil eines dezentralen Speichers, d.h. einer sogenannten Cloud, sein.

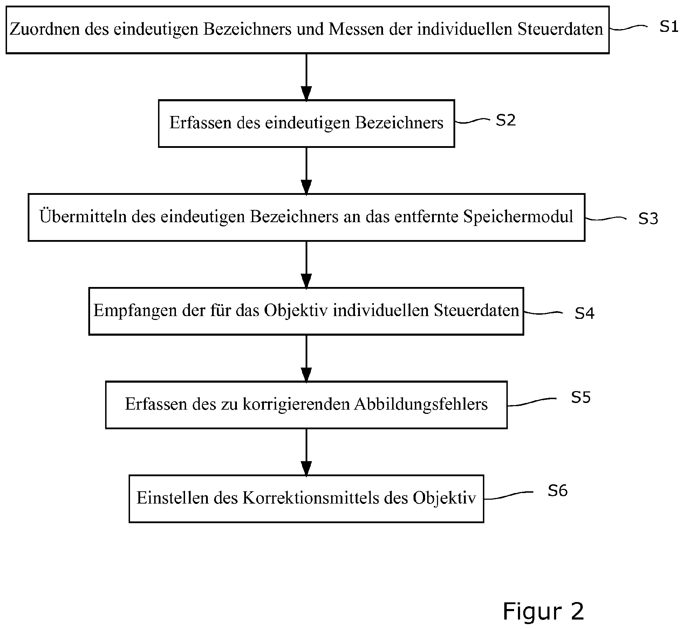

Figur 2 zeigt ein Flussdiagramm, das eine Ausführungsform des erfindungsgemäßen Verfahrens zur Korrektion des Abbildungsfehlers in dem Mikroskopsystem 10 nach Figur 1 zeigt.

In einem ersten Schritt S1 wird im Rahmen der Herstellung des Objektivs 18 letzterem der eindeutige Bezeichner zugeordnet. Ferner werden für das Objektiv 18 individuelle Steuerdaten mittels eines geeigneten Verfahrens ermittelt, z.B. mittels eines interferometrischen Messverfahrens in der Endmontage. Die Steuerdaten repräsentieren eine Zuordnung zwischen den Werten eines Abbildungsfehlers und den Werten einer Stellgröße, mit der das Korrektionsmittel 22 anzusteuern ist, um den Abbildungsfehler im späteren Mikroskopbetrieb zu korrigieren. Der eindeutige Bezeichner und die Steuerdaten werden miteinander verknüpft und in dem entfernten Speichermodul 16 gespeichert.

In einem zweiten Schritt S2 empfängt die Steuereinheit 24 den dem Objektiv 18 zugeordneten eindeutigen Bezeichner. Dies kann beispielsweise mit Hilfe eines geeigneten, in Figur 1 nicht gezeigten Lesegerätes erfolgen. Alternativ wird der eindeutige Bezeichner durch die Bedienperson mittels der Eingabevorrichtung 25 in das Mikroskopsystem 10 eingegeben.

In einem dritten Schritt S3 übermittelt die Steuereinheit 24 den eindeutigen Bezeichner über das Datenfernübertragungsnetzwerk 14 an das entfernte Speichermodul 16. Die Übermittlung kann insbesondere einen Authentifizierungsschritt, beispielsweise die Eingabe einer Benutzerkennung und/oder eines Passwortes, durch die Bedienperson erfordern. Zur Übermittlung notwendige Kontaktdaten des entfernten Speichermoduls 16 werden durch den Benutzer eingegeben. Alternativ werden diese Kontaktdaten dem Mikroskop 12 bei Auslieferung beigefügt.

In einem vierten Schritt S4 empfängt die Steuereinheit 24 die dem Objektiv 18 individuell zugeordneten Steuerdaten von dem entfernten Speichermodul 16 über das Datenfernübertragungsnetzwerk 14.

In einem fünften Schritt S5 erfasst die Steuereinheit 24 den im aktuellen Mikroskopbetrieb zu korrigierenden Abbildungsfehler. Die Erfassung des zu korrigierenden Abbildungsfehlers kann beispielsweise dadurch erfolgen, dass der Abbildungsfehler im Mikroskopbetrieb selbst bestimmt wird, beispielsweise mit Hilfe einer Messung der Deckglasdicke oder einer Brechungsindexmessung. Alternativ kann der zu korrigierende Abbildungsfehler auch dadurch erfasst werden, dass die Bedienperson eine dem Abbildungsfehler entsprechende Information über die Eingabevorrichtung 25 eingibt.

In einem sechsten Schritt S6 nimmt die Steuereinheit 24 eine Einstellung des Korrektionsmittels 22 des Objektiv 18 vor, um den in Schritt S5 erfassten Abbildungsfehler auf Basis der Steuerdaten zu korrigieren, die in Schritt S4 von dem entfernten Speichermodul 16 empfangen worden sind.

Die Erfindung wurde vorstehend anhand eines speziellen Ausführungsbeispiels erläutert. Es versteht sich von selbst, dass die Erfindung nicht auf dieses Ausführungsbeispiel beschränkt ist und eine Reihe von Abwandlungen möglich sind.

Beispielsweise muss es sich bei der erfindungsgemäß angesteuerten optischen Komponente nicht zwingend um ein Objektiv handeln. Es kann sich vielmehr auch um jede andere optische Komponente des Mikroskops handeln.

### Bezugszeichenliste

- 10: Mikroskopsystem
- 12: Mikroskop
- 14: Datenfernübertragungsnetzwerk
- 16: Speichermodul
- 18: Optische Komponente
- 20: Korrektionsmittel
- 22: Deckglas
- 24: Steuereinheit
- 25: Eingabevorrichtung
- 26: Kabel
- O: Achse
- S1 bis S5: Verfahrensschritte

## Patentansprüche

1. Verfahren zum Korrigieren eines Abbildungsfehlers in einem Mikroskopsystem (10), das ein Mikroskop (12) und eine optische Komponente (18) umfasst, wobei ein in der optischen Komponente (18) enthaltenes Korrektionsmittel (22) zum Korrigieren des Abbildungsfehlers eingestellt wird, **dadurch gekennzeichnet, dass** den zu korrigierenden Abbildungsfehler verursachende oder beeinflussende Parameter unter Verwendung des Mikroskops gemessen und an ein entferntes Speichermodul übertragen werden, und
wenigstens eine dem Abbildungsfehler zugeordnete und für die optische Komponente (18) individuelle Stellgröße, anhand derer das Korrektionsmittel (22) einstellbar ist, von dem entfernten Speichermodul (16) über ein Datenfernübertragungsnetzwerk (14) empfangen wird,
wobei das entfernte Speichermodul (16) die individuelle Stellgröße anhand der Parameter, die es von dem Mikroskop (12) empfängt, errechnet und an das Mikroskop (12) übermittelt, wobei die Parameter ein Brechungsindex einer Probe und/oder ein Brechungsindex eines Einbettmediums und/oder ein Brechungsindex eines Immersionsmediums und/oder ein Brechungsindex eines Deckglases und/oder die Dicke des Deckglases und/oder die Position der Objektebene relativ zur Position des Deckglases sind, wodurch Fertigungstoleranzen der optische Komponente komponentenindividuell berücksichtigt werden.

2. Verfahren nach Anspruch 1, **dadurch gekennzeichnet, dass** die optische Komponente (18) ein Objektiv ist.

3. Verfahren nach Anspruch 1 oder 2, **dadurch gekennzeichnet, dass** die wenigstens eine Stellgröße an der optischen Komponente (18) individuell gemessen oder aus optischen Daten der optischen Komponente (18) errechnet wird und dann in dem entfernten Speichermodul (16) gespeichert wird.

4. Verfahren nach einem der Ansprüche 1 bis 3, **dadurch gekennzeichnet, dass** der optischen Komponente (18) ein eindeutiger Bezeichner zugeordnet wird, anhand dessen die wenigstens eine Stellgröße der optischen Komponente (18) eindeutig zuordenbar ist.

5. Verfahren nach einem der Ansprüche 1 bis 4, **dadurch gekennzeichnet, dass** über das Datenfernübertragungsnetzwerk (14) eine Authentifizierung durchgeführt wird, bevor die wenigstens eine Stellgröße empfangen wird.

6. Verfahren nach einem der Ansprüche 1 bis 5, **dadurch gekennzeichnet, dass** der zu korrigierende Abbildungsfehler zumindest unter Verwendung des Mikroskops (12) bestimmt wird.

7. Verfahren nach Anspruch 6, **dadurch gekennzeichnet, dass** der Abbildungsfehler von dem Mikroskop (12) an das entfernte Speichermodul (16) übertragen wird, dass wenigstens eine dem übertragenen Abbildungsfehler zugeordnete und für die optische Komponente (18) individuelle Stellgröße, anhand derer das Korrektionsmittel (22) einstellbar ist, von dem entfernten Speichermodul (16) über ein Datenfernübertragungsnetzwerk (14) empfangen wird und dass auf Grundlage der dem übertragenen Abbildungsfehler zugeordneten Stellgröße die Einstellung des Korrektionsmittels (22) vorgenommen wird.

8. Mikroskopsystem (10) zum Ausführen des Verfahrens gemäss Anspruch 1, umfassend ein Mikroskop (12) und eine optische Komponente (18) mit einem Korrektionsmittel (22), das zum Korrigieren eines Abbildungsfehlers einstellbar ist, **gekennzeichnet durch** ein entferntes Speichermodul (16), wobei das Mikroskopsystem (10) ausgebildet ist, den zu korrigierenden Abbildungsfehler verursachende oder beeinflussende Parameter zu messen und an das entfernte Speichermodul (16) zu übertragen, wobei das entfernte Speichermodul ausgebildet ist, anhand der Parameter, die es von dem Mikroskop (12) empfängt, wenigstens eine dem Abbildungsfehler zugeordnete und für die optische Komponente (18) individuelle Stellgröße, anhand derer das Korrektionsmittel (22) einstellbar ist, zu errechnen und an das Mikroskop (12) zu übermitteln, und wobei das Mikroskopsystem (10) ausgebildet ist, die wenigstens eine individuelle Stellgröße über ein Datenfernübertragungsnetzwerk (14) von dem entfernten Speichermodul (16) zu empfangen wobei die Parameter ein Brechungsindex einer Probe und/oder ein Brechungsindex eines Einbettmediums und/oder ein Brechungsindex eines Immersionsmediums und/oder ein Brechungsindex eines Deckglases und/oder die Dicke des Deckglases und/oder die Position der Objektebene relativ zur Position des Deckglases sind, wodurch Fertigungstoleranzen der optische Komponente komponentenindividuell berücksichtigt werden.

9. Mikroskopsystem (10) nach Anspruch 8, **dadurch gekennzeichnet, dass** das Mikroskop (12) eine Steuereinheit (24) umfasst, die ausgebildet ist, das in der optischen Komponente (18) enthaltene Korrektionsmittel (22) zum Korrigieren des Abbildungsfehlers anzusteuern.

10. Mikroskopsystem (10) nach Anspruch 8 oder 9, **dadurch gekennzeichnet, dass** das Mikroskopsystem (10) ausgebildet ist, einen der optischen Komponente (18) zugeordneten eindeutiger Bezeichner auszulesen, anhand dessen die wenigstens eine Stellgröße der optischen Komponente (18) eindeutig zuordenbar ist.

11. Mikroskopsystem (10) nach Anspruch 10, **gekennzeichnet durch** eine Eingabevorrichtung (25) zur benutzerseitigen Eingabe des der optischen Komponente (18) zugeordneten eindeutigen Bezeichners.

12. Mikroskopsystem (10) nach einem der Ansprüche 8 bis 11, **dadurch gekennzeichnet, dass** in dem entfernten Speichermodul (16) eine für die optische Komponente (18) individuelle Hystereseinformation gespeichert ist, unter Berücksichtigung derer das Korrektionsmittel (22) einstellbar ist.

13. Mikroskopsystem (10) nach einem der Ansprüche 8 bis 12, **dadurch gekennzeichnet, dass** das Korrektionsmittel (14) wenigstens eine Linse umfasst, die zur Korrektion des Abbildungsfehlers entlang der optischen Achse (O) der optischen Komponente (12) bewegbar ist.

14. Mikroskopsystem (10) nach einem der Ansprüche 8 bis 13, **dadurch gekennzeichnet**, **gekennzeichnet durch** einen mechanischen Anschlag und/oder eine Lichtschranke zum Erfassen eines Referenzwertes der Stellgröße.

## Claims

1. A method for correcting an imaging error in a microscope system (10) which comprises a microscope (12) and an optical component (18), wherein a correction means (22) contained in the optical component (18) is adjusted to correct the imaging error, **characterized in that** parameters, causing or influencing the imaging error to be corrected, are measured using the microscope and transferred to a remote memory module, and
at least one control variable, assigned to the imaging error and individual for the optical component (18), by means of which the correction means (22) can be adjusted, is received by the remote memory module (16) via a remote data transmission network (14),
wherein the remote memory module (16) calculates the individual control variable, based on the parameters it receives from the microscope (12), and transmits it to the microscope (12), wherein the parameters are a refractive index of a sample and/or a refractive index of an embedding medium and/or a refractive index of an immersion medium and/or a refractive index of a cover glass and/or the thickness of the cover glass and/or the position of the object plane relative to the position of the cover glass, whereby manufacturing tolerances of the optical component are taken into account on a component-by-component basis.

2. The method according to claim 1, **characterized in that** the optical component (18) is a lens.

3. The method according to claim 1 or 2, **characterized in that** the at least one control variable is individually measured at the optical component (18) or calculated from optical data of the optical component (18) and then stored in the remote memory module (16).

4. The method according to any one of claims 1 to 3, **characterized in that** the optical component (18) is assigned a unique identifier, on the basis of which the at least one control variable of the optical component (18) can be uniquely assigned.

5. The method according to any one of claims 1 to 4, **characterized in that** an authentication is carried out via the remote data transmission network (14) before the at least one control variable is received.

6. The method according to any one of claims 1 to 5, **characterized in that** the imaging error to be corrected is determined at least using the microscope (12).

7. The method according to claim 6, **characterized in that** the imaging error is transmitted from the microscope (12) to the remote memory module (16), that at least one control variable, assigned to the transmitted imaging error and individual for the optical component (18), by means of which the correction means (22) can be adjusted, is received from the remote memory module (16) via a remote data transmission network (14) and that the adjustment of the correction means (22) is carried out on the basis of the control variable, associated with the transmitted imaging error.

8. A microscope system (10) for carrying out the method according to claim 1, comprising a microscope (12) and an optical component (18) with a correction means (22) which is adjustable for correcting an imaging error, **characterized by** a remote memory module (16), wherein the microscope system (10) is configured to measure the parameters causing or influencing the imaging error to be corrected and to transfer them to the remote memory module (16), wherein the remote memory module is configured to calculate, on the basis of the parameters it receives from the microscope (12), at least one control variable, assigned to the imaging error and individual for the optical component (18), on the basis of which the correction means (22) can be adjusted, and to transmit it to the microscope (12), and wherein the microscope system (10) is configured to receive the at least one individual control variable via a remote data transmission network (14) from the remote memory module (16), wherein the parameters are a refractive index of a sample and/or a refractive index of an embedding medium and/or a refractive index of an immersion medium and/or a refractive index of a cover glass and /or the thickness of the cover glass and/or the position of the object plane relative to the position of the cover glass, whereby manufacturing tolerances of the optical component are taken into account on a component-by-component basis.

9. The microscope system (10) according to claim 8, **characterized in that** the microscope (12) comprises a control unit (24) which is configured to control the correction means (22) contained in the optical component (18) for correcting the imaging error.

10. The microscope system (10) according to claim 8 or 9, **characterized in that** the microscope system (10) is configured to read out a unique identifier, assigned to the optical component (18), on the basis of which the at least one control variable of the optical component (18) can be uniquely assigned.

11. The microscope system (10) according to claim 10, **characterized by** an input device (25) for user input of the unique identifier, assigned to the optical component (18).

12. The microscope system (10) according to any one of claims 8 to 11, **characterized in that**, in the remote memory module (16), individual hysteresis information for the optical component (18) is stored, taking into account by which the correction means (22) can be adjusted.

13. The microscope system (10) according to any one of claims 8 to 12, **characterized in that** the correction means (14) comprises at least one lens which is movable along the optical axis (O) of the optical component (12) to correct the imaging error.

14. The microscope system (10) according to any one of claims 8 to 13, **characterized by** a mechanical stop and/or a light barrier for detecting a reference value of the control variable.

## Revendications

1. Procédé de correction d'une anomalie d'image dans un système (10) de microscope, qui comprend un microscope (12) et un composant optique (18), dans lequel un moyen de correction (22) contenu dans le composant optique (18) est réglé pour corriger l'anomalie d'image, **caractérisé en ce que** les paramètres causant ou influençant l'anomalie d'image à corriger sont mesurés au moyen du microscope et transmis à un module de mémoire distant, et
au moins une grandeur de réglage associée à l'anomalie d'image et individuelle pour le composant optique (18), au moyen de laquelle le moyen de correction (22) est réglable, est reçue par le module de mémoire distant (16) via un réseau (14) de télétransmission de données,
dans lequel le module de mémoire distant (16) calcule la grandeur de réglage individuelle au moyen des paramètres qu'il reçoit du microscope (12), calcule et transmet au microscope (12), dans lequel les paramètres sont un indice de réfraction d'un échantillon et/ou un indice de réfraction d'un milieu d'enrobage et/ou un indice de réfraction d'un milieu d'immersion et/ou un indice de réfraction d'une lamelle de recouvrement d'objet et/ou l'épaisseur de la lamelle de recouvrement d'objet et/ou la position du plan d'objet par rapport à la position de la lamelle de recouvrement d'objet, ce qui a pour effet que les tolérances de fabrication du composant optique sont prises en compte individuellement pour chaque composant.

2. Procédé selon la revendication 1, **caractérisé en ce que** le composant optique (18) est un objectif.

3. Procédé selon la revendication 1 ou la revendication 2, **caractérisé en ce que** ladite au moins une grandeur de réglage sur le composant optique (18) est mesurée individuellement ou est calculée à partir de données optiques du composant optique (18), et est ensuite enregistrée dans le module de mémoire distant (16).

4. Procédé selon l'une quelconque des revendications 1 à 3, **caractérisé en ce qu'**un identifiant unique, au moyen duquel ladite au moins une grandeur de réglage peut être associée de manière univoque au composant optique (18), est associé au composant optique (18).

5. Procédé selon l'une quelconque des revendications 1 à 4, **caractérisé en ce qu'**une authentification est effectuée via le réseau (14) de télétransmission de données avant que ladite au moins une grandeur de réglage soit reçue.

6. Procédé selon l'une quelconque des revendications 1 à 5, **caractérisé en ce que** l'anomalie d'image à corriger est déterminée au moins au moyen du microscope (12).

7. Procédé selon la revendication 6, **caractérisé en ce que** l'anomalie d'image est transmise du microscope (12) au module de mémoire distant (16), **en ce qu'**au moins une grandeur de réglage associée à l'anomalie d'image transmise et individuelle pour le composant optique (18), au moyen de laquelle le moyen de correction (22) est réglable, est reçue par le module de mémoire distant (16) via un réseau (14) de télétransmission de données, et **en ce que** le réglage du moyen de correction (22) est effectué sur la base de la grandeur de réglage associée à l'anomalie d'image transmise.

8. Système (10) de microscope pour mettre en œuvre le procédé selon la revendication 1, comprenant un microscope (12) et un composant optique (18) avec un moyen de correction (22) qui est réglable pour corriger une anomalie d'image, **caractérisé par** un module de mémoire distant (16), dans lequel le système (10) de microscope est conçu de façon à mesurer les paramètres causant ou influençant l'anomalie d'image à corriger et pour les transmettre au module de mémoire distant (16), dans lequel le module de mémoire distant est conçu de façon à calculer, au moyen des paramètres qu'il reçoit du microscope (12), au moins une grandeur de réglage associée à l'anomalie d'image et individuelle pour le composant optique (18), au moyen de laquelle le moyen de correction (22) est réglable, et pour la transmettre au microscope (12), et dans lequel le système (10) de microscope est conçu de façon à recevoir l'au moins une grandeur de réglage individuelle via un réseau de télétransmission de données (14) du module de mémoire distant (16), dans lequel les paramètres sont un indice de réfraction d'un échantillon et/ou un indice de réfraction d'un milieu d'enrobage et/ou un indice de réfraction d'un milieu d'immersion et/ou un indice de réfraction d'une lamelle de recouvrement d'objet et/ou l'épaisseur de la lamelle de recouvrement d'objet et/ou la position du plan d'objet par rapport à la position de la lamelle de recouvrement d'objet, ce qui a pour effet que les tolérances de fabrication du composant optique sont prises en compte de manière individuelle pour chaque composant.

9. Système (10) de microscope selon la revendication 8, **caractérisé en ce que** le microscope (12) comprend une unité de commande (24), qui est conçue de façon à commander le moyen de correction (22) contenu dans le composant optique (18) afin de corriger l'anomalie d'image.

10. Système (10) de microscope selon la revendication 8 ou la revendication 9, **caractérisé en ce que** le système (10) de microscope est conçu de façon à lire un identifiant unique associé au composant optique (18), au moyen duquel ladite au moins une grandeur de réglage du composant optique (18) peut être associée de manière univoque.

11. Système (10) de microscope selon la revendication 10, **caractérisé par** un dispositif de saisie (25) pour la saisie par l'utilisateur de l'identifiant unique associé au composant optique (18).

12. Système (10) de microscope selon l'une quelconque des revendications 8 à 11, **caractérisé en ce qu'**une information d'hystérèse individuelle pour le composant optique (18), dont la prise en compte permet de régler le moyen de correction (22), est enregistrée dans le module de mémoire distant (16).

13. Système (10) de microscope selon l'une quelconque des revendications 8 à 12, **caractérisé en ce que** le moyen de correction (14) comprend au moins une lentille qui est mobile le long de l'axe optique (O) du composant optique (12) afin de corriger l'anomalie d'image.

14. Système (10) de microscope selon l'une quelconque des revendications 8 à 13, **caractérisé par** une butée mécanique et/ou une barrière lumineuse pour l'acquisition d'une valeur de référence de la grandeur de réglage.
